# EUROPÄISCHE PATENTANMELDUNG

(11) **EP 2 199 805 A2**
(43) Veröffentlichungstag der Anmeldung: **23.06.2010**
(21) Anmeldenummer: 09176138.7
(22) Anmeldetag: 16.11.2009
(51) Int. Cl.: G01N 35/04

(54) **Analyseeinrichtung, Probenhalter und Analyseeinheit zur Analyse von Proben**

(30) Priorität: 18.11.2008 DE 102008057955; 10.06.2009 DE 102009026889
(71) Anmelder: BST-Bio Sensor Technology GmbH, 13156 Berlin (DE)
(72) Erfinder: Gandhi, Adrian, 47661 Issum (DE); Hunecken, Lars, 46562 Vörde (DE)
(74) Vertreter: Gulde Hengelhaupt Ziebig & Schneider

(57) **Zusammenfassung**

Die Erfindung betrifft eine Analysiereinrichtung und einen Probenhalter sowie eine Analysiereinheit, die die Analysiereinrichtung und den Probenhalter umfasst. Außerdem betrifft die Erfindung ein Verfahren zum Betreiben der Analyseeinheit. Erfindungsgemäß ist vorgesehen, dass die zur Analyse von Proben, insbesondere klinischer Patientenproben und/oder Kontrollproben dienende Analyseeinrichtung einen Analysator umfasst und wenigstens eine daran angeschlossene Probenahmekanüle zur Entnahme der Probe aus einem Probengefäß, insbesondere aus einem Reagenzgefäß, wobei die Analyseeinrichtung eine Aufnahmeeinrichtung umfasst, an der ein Probenhalter zur Aufnahme von Probengefäßen befestigbar oder befestigt ist. Die Analyseeinrichtung umfasst des weiteren wenigstens ein erstes Linear-Positionierungssystem, mittels dessen im Wesentlichen lineare translatorische Relativbewegungen in einer ersten Richtung zwischen der Aufnahmeeinrichtung und dem Analysator durchführbar ist, so dass in dem Probenhalter angeordnete Probengefäße mit ihren Längsachsen derart zur Probenahmekanüle positioniert oder positionierbar sind, dass die Probenahmekanüle in ein Probengefäß einfahrbar ist.

## Beschreibung

Die vorliegende Erfindung betrifft eine Analyseeinrichtung und eine Analyseeinheit zur Analyse von Proben, insbesondere von klinischen Patientenproben und/oder Kontrollproben.

Außerdem betrifft die vorliegende Erfindung einen Probenhalter als Bestandteil der Analyseeinheit, welcher geeignet ist, in bzw. an der erfindungsgemäßen Analyseeinrichtung verwendet zu werden. Des Weiteren betrifft die vorliegende Erfindung ein Verfahren zum Betrieben der erfindungsgemäßen Analyseeinheit.

Die Erfindung betrifft insbesondere Analysegeräte oder deren Komponenten, die bevorzugt in der Labor- und POCT-Diagnostik eingesetzt werden.

In der klinischen Diagnostik werden seit langer Zeit Analysatoren zur Untersuchung von Patientenmaterial eingesetzt. Dieses Material kann Vollblut, Urin, Liquor oder aus Blut hergestelltes Plasma, Hämolysat oder Serum sein.

Verschiedene Metabolite, z. B. Blutzucker, werden üblicherweise heute aus dem Hämolysat, einem hochverdünnten Vollblut, bestimmt. Dieses Hämolysat wird dadurch erzeugt, dass ein definiertes Volumen Vollblut mittels end-zu-end Kapillare in ein definiertes Volumen Verdünnungsvorlage im Reagenzgefäß gegeben wird, verschlossen und dann gemischt wird.

Zur Blutprobenuntersuchung werden Analysegeräte verwendet. Die dafür offensichtlich nahe liegende und heute im Allgemeinen verwendete Form ist ein Teller, auf dem zwischen 10 und 60 Probenpositionen angeordnet sind. Die Reagenzgefäße mit der jeweils zu identifizierenden Probe werden in Öffnungen des Tellers platziert. Zur Analyse einer auf dem Teller befindlichen Probe wird der Teller dazu im Analysator durch Rotation so positioniert, dass die Probenahme über eine fixierte Kanüle erfolgen kann.

Die Anzahl in einem bestimmten Zeitraum anfallenden zu untersuchenden Proben kann sehr unterschiedlich sein. Es ist daher für den Nutzer oft schwierig, die richtige Auswahl unter den angebotenen Analysegeräten zu treffen. Die Bindung einer Analyseeinrichtung mit einer Kapazität für 60 oder mehr Proben zur Analyse von z. B. nur 10 Proben ist unwirtschaftlich.

Analyseeinrichtungen zur Analyse von Proben, die zur Aufnahme einzelner Reagenzgefäße mit darin enthaltenen Proben Drehteller aufweisen, sind z. B. in den Dokumenten DE 43 02 828 C1 und DE 33 17 560 C2 dargestellt. Durch die Drehung dieser Drehteller um bestimmte Winkelbereiche lassen sich in diesen Winkelbereichen angeordnete Proben der Position einer Probeentnahmeeinrichtung, wie z. B. eine Probenahmekanüle, zuordnen, so dass diese Probenahmekanüle in das Probengefäß einfahren kann und eine Probe zwecks Analyse aus dem Gefäß herausnehmen kann.

Als nachteilig erweist sich bei diesen Analyseeinrichtungen ein erhöhter Aufwand zur Bereitstellung der Proben. Die Proben werden üblicher Weise nach ihrer Entnahme in größeren Gefäßen verwahrt, aus denen sie zwecks Analyse in kleinere Probenahmegefäße gegeben werden müssen, die geeignet sind, in der Analyseeinrichtung aufgenommen zu werden. Zu Bestückung dieser kleineren Probenahmegefäße müssen diese in einem Halter positioniert werden und anschließend mit den entnommenen Proben versehen werden. Danach müssen die bestückten Probenahmegefäße den beschriebenen Aufnahmen im Drehteller zugeordnet werden, indem sie in diese eingesteckt werden. Nach erfolgter Analyse müssen die Probenahmegefäße, um Platz zu schaffen für weitere Probenahmegefäße anderer Analysen, aus dem Drehteller entfernt werden. Zu diesem Zweck müssen sie manuell oder automatisiert gegriffen werden und aus den Aufnahmen herausgezogen werden.

Die beschriebenen oftmals manuell vorzunehmenden Operationen binden über eine relativ lange Zeit Arbeitskräfte und können außerdem leicht dazu führen, dass Verwechslungen von Proben bzw. von den Positionen, an denen die Proben anzuordnen sind, erfolgen.

Die Aufgabe der vorliegenden Erfindung ist es daher, eine Analyseeinrichtung sowie einen geeigneten Probenhalter zur Verfügung zu stellen, die zusammen eine Analyseeinheit ausbilden, mit der in einfacher und flexibler sowie kostengünstiger Weise Proben in unterschiedlicher Anzahl analysiert werden können.

Die Aufgabe wird durch die Analyseeinrichtung gemäß Anspruch 1 und durch den Probenhalter gemäß Anspruch 12 sowie durch die die Analyseeinrichtung und den Probenhalter umfassende Analyseeinheit gemäß Anspruch 21 gelöst.

Vorteilhafte Ausgestaltungen der Analyseeinrichtung sind in den Unteransprüchen 2 bis 11 angegeben.

Vorteilhafte Ausgestaltungen des Probenhalters sind in den Unteransprüchen 13 bis 20 angegeben.

Ergänzend wird ein Verfahren zum Betreiben der erfindungsgemäßen Analyseeinheit gemäß Anspruch 22 zur Verfügung gestellt.

Erfindungsgemäß wird eine Analyseeinrichtung zur Analyse von Proben, insbesondere klinischer Patientenproben und/oder Kontrollproben zur Verfügung gestellt, die einen Analysator umfasst und wenigstens eine daran angeschlossene Probenahmekanüle zur Entnahme der Probe aus einem Probengefäß, insbesondere aus einem Reagenzgefäß, wobei die Analyseeinrichtung eine Aufnahmeeinrichtung umfasst, an der ein Probenhalter zur Aufnahme von Probengefäßen angeordnet ist oder angeordnet werden kann, und wobei die Analyseeinrichtung wenigstens ein erstes Linear-Positionierungssystem umfasst, mittels dessen im Wesentlichen lineare translatorische Relativbewegungen in einer ersten Richtung zwischen der Aufnahmeeinrichtung und dem Analysator durchführbar sind, so dass in dem Probenhalter angeordnete Probengefäße mit ihren Längsachsen derart zur Probenahmekanüle positioniert oder positionierbar sind, dass die Probenahmekanüle in ein jeweils positioniertes Probengefäß einfahrbar ist.

Das heißt, dass im Gegensatz zu dem bisher bekannten Drehteller eine Einrichtung verwendet wird, mittels derer in anderer als bisher bekannter Art und Weise eine geradlinige Bewegung der Probengefäße erzeugt werden kann, die dazu dient, automatisch oder manuell zu einem bestimmten Zeitpunkt eine bestimmte Probe der Analyseeinrichtung zuzuführen.

Das Linear-Positionierungssystem kann ein Linearantrieb oder ein Linear-Führungssystem, gekoppelt mit einer entsprechenden Antriebseinheit, sein.

Der Probenhalter kann auch in der Aufnahmeeinrichtung angeordnet sein.

Mit der ersten Bewegungsrichtung ist die Ausrichtung einer Gerade im Raum gemeint, welche nicht durch einen Richtungssinn eines Vektors gekennzeichnet ist.

Die Anordnung des Probenhalters kann durch eine mechanische Befestigung des Probenhalters an der Aufnahmeeinrichtung und/ oder durch eine formschlüssige Aufnahme des Probenhalters in der Aufnahmeeinrichtung realisiert sein.

Aus der Position der Probenahmekanüle über einem Probengefäß lässt sich die Probenahmekanüle in das Probengefäß einfahren, mittels der Kanüle eine Probe entnehmen und dann die Probenahmekanüle wieder aus dem Probengefäß herausfahren. Anschließend erfolgt eine erneute Positionierung der Probenahmekanüle und/oder der Probengefäße mittels Betätigung des ersten Linear-Positionierungssystems, das heißt, Positionierung der Probenahmekanüle über einem anderen Probengefäß und erneutes Ein- und Ausfahren, verbunden mit erneuter Probenentnahme.

In einer bevorzugten Ausführungsform ist vorgesehen, dass die Analyseeinrichtung als Aufnahmeeinrichtung eine Schwenkeinrichtung umfasst, an der ein Probenhalter befestigbar oder befestigt ist, der mittels der Schwenkeinrichtung in einen Winkelbereich um eine im Wesentlichen senkrecht zur Probenahmekanülenachse verlaufende Achse derart verschwenkbar ist, so dass abweichend von der ersten Linearbewegungsrichtung nebeneinander im Probenhalter angeordnete Probengefäße unter der Probenahmekanüle positionierbar sind.

Dabei müssen die Probengefäße nicht in einer Reihe senkrecht nebeneinander angeordnet sein, sondern es ist auch eine versetzte Anordnung möglich.

Das heißt, ein Aspekt der vorliegenden Erfindung ist eine Schwenkeinrichtung, die als Bestandteil der Analyseeinrichtung geeignet ist, einen ebenfalls erfindungsgemäßen Probenhalter aufzunehmen und relativ zu den anderen Bestandteilen der Analyseeinrichtung, insbesondere zu einer Probenahmekanüle, zu verschwenken und in unterschiedlichen Winkelpositionen zu fixieren.

Die Schwenkeinrichtung kann dabei Formelemente aufweisen, die im Wesentlichen komplementär zu äußeren Formelementen des Probenhalters ausgestaltet sind, um den Probenhalter im Wesentlichen formschlüssig aufnehmen zu können oder aufzunehmen.

Die Schwenkeinrichtung ist bevorzugt derart konzipiert, dass sie den aufgenommenen Probenhalter um eine Achse verschwenken kann, die im Wesentlichen senkrecht zu den Längsachsen der darin aufgenommenen oder aufzunehmenden Probengefäße verläuft.

Vorteilhafterweise ist der Antrieb der Schwenkeinrichtung motorisch, insbesondere elektromotorisch realisiert, wobei zum Antrieb z. B. ein Schrittmotor dienen kann, der über eine geeignete Steuerung und gegebenenfalls über ein passendes Getriebe die Schwenkeinrichtung und damit den darin aufgenommenen Probenhalter und die darin angeordneten Proben schwenkt. Die Ansteuerung des Motors kann rechnergestützt über eine geeignete Software erfolgen.

In einer alternativen Ausführungsform ist vorgesehen, dass die Schwenkeinrichtung manuell betätigbar ist.

Um den Steuerungsaufwand zu minimieren ist vorgesehen, dass die Schwenkeinrichtung Rastelemente aufweist, die es ermöglichen, den Probenhalter in eine gewünschte Winkelposition zu verschwenken und dort zu fixieren.

Das heißt, dass eine Ausführungsform des Gegenstandes der Erfindung eine Schwenkeinrichtung ist, die auch Probentrommel genannt wird. Sie dient dem Laboranalysator zum effektiven Umgang mit Patientenproben in der Präanalytik sowie beim Zeitmanagement.

Diese einem Analysator zugeordnete Schwenkeinrichtung bzw. Probentrommel ist bevorzugt an einem Labor- oder POCT-Analysator zur Untersuchung klinischer Patientenproben und Kontrollproben angeordnet, wobei die Schwenkeinrichtung bzw. Probentrommel mit einem Probenhalter um eine Achse drehbewegt werden kann.

Eine Zusammenwirkung der Sensorik und Mechanik des Analysators ermöglicht, dass die vorhandenen Proben und Kontrollen in der gewünschten Reihenfolge zur Verfügung stehen und durch die Probenamekanüle zur Untersuchung im Analysator entnommen werden können und die Proben durch das Messsystem, umfassend Analysesystem und Sensoren, identifiziert werden können.

Die Schwenkeinrichtung bzw. ein Antrieb für die Schwenkeinrichtung kann über eine z. B. serielle Schnittstelle an einem von der Analyseeinrichtung umfassten Gerätecontroller angeschlossen sein. Über den Controller lässt sich eine Steuerung des Schwenkeinrichtungsantriebs sowie von Sensoren und Schaltern und der Linearbewegungseinrichtungen realisieren.

Die Analyseeinrichtung kann ein zweites Linear-Positionierungssystem umfassen zur Realisierung von linearen translatorischen Bewegungen des Analysators in Bezug zur Aufnahmeeinheit in einer zweiten Richtung, die im Wesentlichen senkrecht zur ersten Bewegungsrichtung verläuft. Die Bewegung in zweiter Richtung dient zur Realisierung des Eintauchens der Probenahmekanüle.

Das heißt, dass die Eintauchbewegung der Probenahmekanüle im Wesentlichen linear erfolgt. Mit abweichender konstruktiver Ausgestaltung der Erfindung kann die Eintauchbewegung aber auch bogenförmig auf Grund einer Rotationsbewegung der Probenahmekanüle sein.

In einer ersten konstruktiven Ausführungsform ist vorgesehen, dass der Analysator fixiert ist und die Aufnahmeeinrichtung mittels des ersten Linear-Positionierungssystems bewegbar ist.

In einer zweiten, alternativen konstruktiven Ausführungsform ist vorgesehen, dass die Aufnahmeeinrichtung fixiert ist und der Analysator mittels des ersten Linear-Positionierungssystems bewegbar ist.

Zur Verschiebung der Aufnahmeeinrichtung in einer dritten Richtung, die im Wesentlichen senkrecht zur ersten und zur zweiten Bewegungsrichtung verläuft, ist vorgesehen, dass die Analyseeinrichtung ein drittes Linear-Positionierungssystem umfasst. Die Ausgestaltung der Erfindung mit dem dritten Linear-Positionierungssystem ist vorzugsweise in einer Analyseeinrichtung ohne Schwenkeinrichtung zu realisieren.

Damit lassen sich abweichend von der ersten Bewegungsrichtung nebeneinander angeordnete Probengefäße in Positionen bewegen, in denen die Probenentnahme mittels Probenahmekanüle erfolgen kann.

Auch für die zweite und dritte Bewegungsrichtung gilt, dass damit die Ausrichtung einer Gerade im Raum gemeint ist, die nicht durch einen bestimmten Richtungssinn eines Vektors gekennzeichnet ist. Mit der senkrechten Anordnung der Richtungen zueinander ist jeweils ein Winkelbereich gemeint, in dem die Bewegungsrichtungen sinnvoller Weise zueinander verlaufen. Der Winkelbereich ist dabei nicht auf exakt 90° festgelegt.

In einer weiteren bevorzugten Ausgestaltung ist vorgesehen, dass die Analyseeinrichtung einen Scanner umfasst. Dieser Scanner dient zur Identifikation von Proben, zum Beispiel durch die Auslesung von Barcodes, die an den Probengefäßen angebracht sind.

Des Weiteren wird erfindungsgemäß ein Probenhalter zur Aufnahme von Probengefäßen, insbesondere von Reagenzgefäßen, zur Verfügung gestellt, der im wesentlichen als Block ausgebildet ist und eine Mehrzahl von Aufnahmeöffnungen zum Einstecken der Probengefäße aufweist, wobei er dabei derart ausgestaltet ist, dass er in der Aufnahmeeinrichtung der erfindungsgemäßen Analyseeinrichtung aufnehmbar ist und durch diese Aufnahmeeinrichtung verfahrbar und/oder, bei Ausgestaltung der Aufnahmeeinrichtung als Schwenkeinrichtung, um eine Achse schwenkbar ist. Das heißt, dass der in der auch Trommel genannten Schwenkeinrichtung befindliche Probenhalter für die Patientenproben aus der Schwenkeinrichtung herausnehmbar ist. Damit ist eine einfache Austauschbarkeit des Probenhalters gewährleistet.

Die Größe der Aufnahmeöffnungen ist dabei derart ausgelegt, dass in ihnen übliche handelsübliche Reaktionsgefäße aufgenommen werden können und auch bei einer Schwenkbewegung mit einem Winkel bis zu 90° nicht aus den Aufnahmeöffnungen heraus fallen.

Vorteilhafterweise ist der Probenhalter derart ausgestaltet, dass er aufgrund von Auflagerpunkten oder einer Auflagerfläche selbstständig stehen kann. Das heißt, dass der Probenhalter ohne Hilfsmittel aufstellbar ist, so dass Probengefäße in den Probenhalter einsteckbar sind. Ein Vorteil dieser Ausgestaltung liegt insbesondere darin, dass ein Entleeren des Probenhalters in einfacher Weise durch Auskippen der darin enthaltenen Probengefäße und Proben erfolgen kann. Dies ist ein weiterer Vorteil gegenüber den bisher bekannten Analyseeinrichtungen, bei denen die Entfernung der Probengefäße einzeln manuell oder automatisiert erfolgen muss.

Außerdem lässt sich der Probenhalter am Ort der Probenentnahme, z. B. an einem Patienten, zur Verfügung stellen, mit darin aufgenommenen Proben aufbewahren und zur Analyseeinrichtung transportieren.

Vorzugsweise sind die Aufnahmeöffnungen im Probenhalter linear in Reihe in regelmäßigen Abständen angeordnet. Dabei kann der Probenhalter mehrere Reihen, insbesondere 2 Reihen, von Aufnahmeöffnungen umfassen, wobei die einzelnen Aufnahmeöffnungen der Reihen zueinander versetzt angeordnet sind.

Das heißt, dass die Aufnahmeöffnung mit Nummer n (n-te Aufnahmeöffnung) einer Reihe einen anderen Abstand zu einer stirnseitigen Wand des Probenhalters aufweist, als die Aufnahmeöffnung mit Nummer n (n-te Aufnahmeöffnung) der benachbarten Reihe.

Diese Ausführungsform sollte bevorzugt in der mit einer Schwenkeinrichtung ausgestatten Analyseeinrichtung Verwendung finden.

Alternativ kann vorgesehen sein, dass in dem Probenhalter lediglich eine Reihe mit Aufnahmeöffnungen angeordnet ist. Diese Ausführungsform sollte bevorzugt in der Analyseeinrichtung ohne Schwenkeinrichtung Verwendung finden, bei der lediglich lineare Verfahrbewegungen möglich sind.

Eine vorteilhafte Ausgestaltung der Erfindung liegt darin, dass eine Mehrzahl der Aufnahmeöffnungen im Probenhalter einen zu einer Längsseite des Probenhalters ausgerichteten Schlitz in Richtung der Längsachse der Aufnahmeöffnung umfasst. So lassen sich, wenn das Probengefäß mit einem Barcode an seiner Zylindermantelfläche versehen ist, durch die Schlitze in den Aufnahmeöffnungen diese Barcodes mittels Scanner auslesen und somit feststellen, welche Probe sich an welcher Position im Probenahmegefäß befindet. Es lässt sich damit das jeweilige Analyse- bzw. Messergebnis eindeutig einer Probe automatisch zuordnen.

Es kann vorgesehen sein, dass wenigstens eine der Aufnahmeöffnungen geeignet und dafür vorgesehen ist, eine Kalibrationsprobe oder Kontrollprobe aufzunehmen.

Das heißt, dass in wenigstens einer der Aufnahmeöffnungen sich ein Gefäß befindet mit einer Kalibratrions- oder Kontrollprobe. Gegebenenfalls befindet sich die Probe auch direkt in der Aufnahmeöffnung. In bevorzugter Ausgestaltung werden jedoch Kalibrations- und Kontrollproben in wenigstens einem separaten Kalibrations- und Kontrollprobenhalter zur Verfügung gestellt, der in die Aufnahmeeinrichtung einsetzbar und aus dieser bei Bedarf herausnehmbar ist. Es können in einem solchen Kalibrations- und Kontrollprobenhalter zum Beispiel vier Einsteckmöglichkeiten für Gefäße für Kalibrations- und Kontrollproben vorhanden sein, so dass zum Beispiel eine Kalibrationsprobe und drei Kontrollproben darin aufnehmbar oder aufgenommen sind. Die Kalibrations- und Kontrollproben können bei Bedarf in die entsprechenden Behälter nachgefüllt werden oder die Behälter können ausgetauscht werden.

Erfindungsgemäß wird außerdem eine Analyseeinheit zur Verfügung gestellt, welche eine erfindungsgemäße Analyseeinrichtung und wenigstens einen in die Aufnahmeeinrichtung eingesetzten erfindungsgemäßen Probenhalter und gegebenenfalls wenigstens einen Kalibrations- und Kontrollprobenhalter umfasst.

Das heißt, dass ein weiterer Aspekt der vorliegenden Erfindung eine Einheit ist, die sich aus der erfindungsgemäßen Analyseeinrichtung und dem erfindungsgemäßen Probenhalter sowie gegebenenfalls einem Kalibrations- und Kontrollprobenhalter zusammensetzt.

Dadurch, dass der Probenhalter vorteilhafter Weise derart ausgestaltet ist, dass er aufgrund von Auflagerpunkten oder einer Auflagerfläche selbstständig stehen kann, wird ein einfaches Bestücken der Probengefäße, die bereits im Probenhalter aufgenommen sind, gewährleistet. Anschließend braucht der mit den Probengefäßen und Proben versehene Probenhalter nur noch in die Aufnahmeeinheit bzw. Schwenkeinrichtung eingesetzt zu werden, wobei zu diesem Zweck die Schwenkeinrichtung in eine bestimmte Winkelposition zu schwenken ist, die ein leichtes Einsetzen des Probenhalters ermöglicht.

Danach wird die Schwenkeinrichtung betätigt, so dass die Längsachsen von Probengefäßen bzw. der sie aufnehmenden Aufnahmeöffnungen mit der Längsachse der Probenahmekanüle im Wesentlichen parallel verlaufen. Durch die Betätigung des ersten Linear-Positionierungssystems lässt sich jetzt jeweils ein Probenahmegefäß unter der Probenahmekanüle anordnen, so dass bei der Betätigung des zweiten Linear- Positionierungssystems die Probenahmekanüle in das Probengefäß einfahren und die Probe entnehmen kann.

Bei gewünschter Probenahme von in einer zweiten Reihe im Probenhalter angeordneten Probengefäßen wird die Schwenkeinrichtung erneut betätigt, so dass die Längsachsen der in der zweiten Reihe angeordneten Probengefäße im Wesentlichen parallel zur Längsachse der Probenahmekanüle angeordnet sind. Der Probeentnahmeprozess wiederholt sich wie zur ersten Reihe beschrieben.

Nach der Entnahme aller gewünschten Proben kann durch die Schwenkeinrichtung der Probenhalter wieder in eine derartige Position geschwenkt werden, dass er ohne Kollision mit weiteren Analyseeinrichtungskomponenten aus der Schwenkeinrichtung entnommen werden kann.

Eine nur translatorisch bewegbare Aufnahmeeinheit wird in eine solche Position gefahren, in der der Probenhalter problemlos eingesetzt werden kann, ohne dass die Gefahr der Kollision mit der Probenahmekanüle besteht. Anschließend wird die Aufnahmeeinheit in eine solche Position gefahren, in der eines der im Probenhalter angeordneten Probengefäße unter der Probenahmekanüle positioniert ist. Die Probenentnahme kann wie beschrieben erfolgen.

Dabei sind die Probengefäße entweder nur in einer Reihe angeordnet, oder bei Anordnung in mehreren Reihen wird eine zweite Linearbewegung zwischen Analysator und Aufnahmeeinheit durchgeführt, so dass die Probengefäße der zweiten Reihe unter der Probenahmekanüle positionierbar sind.

Dies kann durch eine Bewegung des Analysators zur Aufnahmeeinheit oder umgekehrt oder durch eine Kombination dieser Bewegungen realisiert werden.

Durch die vorliegende Erfindung lässt sich somit im Wesentlichen insbesondere bei der Präanalytik Zeit einsparen und Zuordnungsfehler vermeiden bzw. verringern. Außerdem wird bei der Entsorgung bzw. Neubestückung der Analyseeinheit Zeit und Arbeitsaufwand eingespart. Im Unterschied zur Verwendung von Drehtellern ist mit der vorliegenden Erfindung keine Festlegung auf einen speziellen Teller erforderlich, sondern durch den Einsatz von ein bis unendlich vielen Probenhaltern (z.B. auch zeitlich nacheinander) in ein und derselben Analyseeinrichtung kann ein Gerät den Tagesanforderungen angepasst eingesetzt werden. Weiterhin entfällt das Anfassen der einzelnen Reagenzgefäße beim Entsorgen, da der Probenhalter die gleichzeitige Entsorgung aller im Probenhalter befindlichen Proben durch Auskippen ermöglicht.

Ergänzend wird ein Verfahren zum Betreiben der erfindungsgemäßen Analyseeinheit zur Verfügung gestellt, bei dem ein Probenhalter mit Proben bestückt wird, danach an der Aufnahmeeinrichtung befestigt wird und mittels linearer Bewegungen derart Positionierungen des Proben halters in Bezug zur Probenahmekanüle erfolgen, dass in einer jeweiligen Position die Entnahme einer jeweiligen Probe realisierbar ist und danach eine jeweilige Probenentnahme und Analyse erfolgt.

Zur Erläuterung der Erfindung wird im Folgenden wird Bezug genommen auf die beiliegenden Darstellungen, die die Erfindungen zeigen.

Es zeigt dabei
- Figur 1:: eine erfindungsgemäße Analyseeinheit in perspektivischer Ansicht,
- Figur 2:: die Analyseeinheit in Ansicht von der Seite mit der Schwenkeinrichtung in einer ersten Schwenkposition,
- Figur 3:: die Analyseeinheit in Ansicht von der Seite mit der Schwenkeinrichtung in einer weiten Schwenkposition,
- Figur 4:: eine Analyseeinheit in Draufsicht mit lediglich linear bewegbarer Aufnahmeeinrichtung.

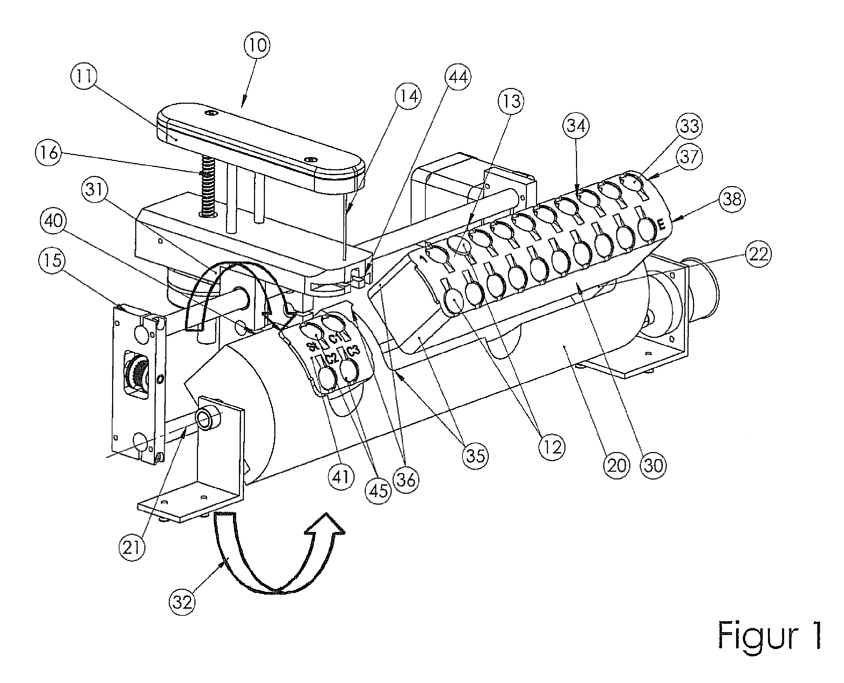

Wie in Figur 1 dargestellt, umfasst die Analyseeinrichtung 10 einen Analysator 11, der im Folgenden auf Grund seiner funktionsbedingten Geometrie als Turm bezeichnet wird und an einem zweiten Linear-Positionierungssystem 16 befestigt ist, das wiederum an einem ersten Linear-Positionierungssystem 15 angeordnet ist. Mittels des erstes Linear-Positionierungssystem 15 lässt sich der Turm 11 in einer ersten Richtung linear verfahren, die als x-Richtung definiert wird. Mittels des zweiten Linear-Positionierungssystems 16 lässt sich der Turm in einer zweiten Richtung, die als y-Richtung definiert ist, verfahren.

Am Turm 11 sich senkrecht nach unten erstreckend angeordnet befindet sich eine Probenahmekanüle 14, mittels derer Proben in den Turm 11 zu Analysezwecken gefördert werden können.

Dem Turm 11 zugeordnet ist eine Aufnahmeeinrichtung 20, die in der in Figuren 1 bis 3 gezeigten Ausführungsform eine Schwenkeinrichtung bzw. eine Trommel ist und im Wesentlichen unter der Probenahmekanüle 14 positioniert bzw positionierbar ist. Die Aufnahmeeinrichtung bzw. Schwenkeinrichtung 20 ist um eine Drehachse 21 drehbar. In der Schwenkeinrichtung 20 ist als negatives Formelement eine Aufnahme 22 integriert, die im Wesentlichen die äußeren Abmaße eines darin aufzunehmenden Probenhalters 30 aufweist. Das heißt, dass ein Probenhalter 30 einfach in die Aufnahme 22 in der Schwenkeinrichtung 20 eingesteckt werden kann. Dabei kann der Probenhalter 30 aufgrund unterschiedlicher Radien 35, 36 an Probenhalter und Schwenkeinrichtung nur in einer bestimmten Position in der Schwenkeinrichtung 20 aufgenommen werden. Damit wird verhindert, dass der Probenhalter 30 auch um 180° gedreht in die Schwenkeinrichtung 20 falsch eingesetzt werden kann. Neben dem in die Schwenkeinrichtung 20 einzusetzenden Probenhalter 30 können außerdem Kalibrations- und Kontrollproben 45 in der Schwenkeinrichtung 20 durch die Aufnahme eines separaten Kalibrations- und Kontrollprobenhalters 41, in dem die Kalibrations- und Kontrollproben 45 angeordnet sind, positioniert sein.

In alternativer Ausgestaltung ist vorgesehen, dass die Kalibrations- und Kontrollproben 45 ebenfalls im Probenhalter 30 angeordnet sind.

Wie dargestellt, hat der Probenhalter 30 im Wesentlichen eine Blockform, die es ermöglicht, ihn zur Bestückung mit Probengefäßen 12 auf einer ebenen Unterlage abzustellen. Es können somit bereits mit Proben bestückte Probengefäße 12 in einfacher Weise in den Probenhalter 30 bzw. in dessen Aufnahmeöffnungen 33 eingesteckt werden oder es können die Probengefäße 12 vor Bestückung mit den Proben in die Aufnahmeöffnungen 33 des Probenhalters 30 eingesetzt werden und dort mit den Proben bestückt werden.

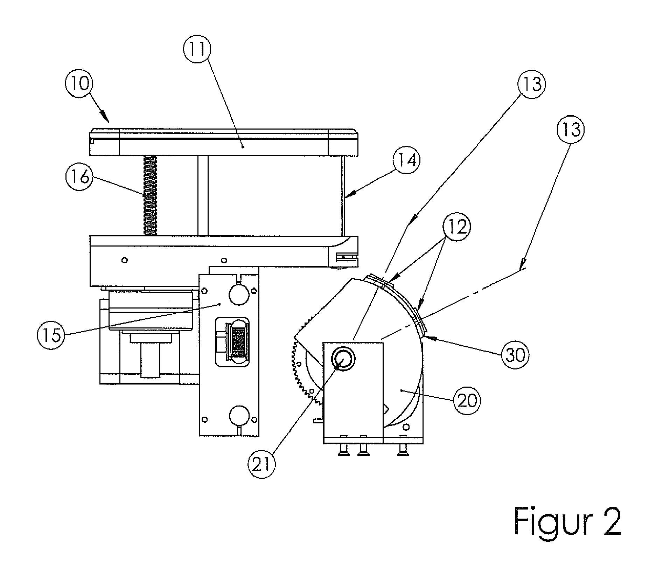

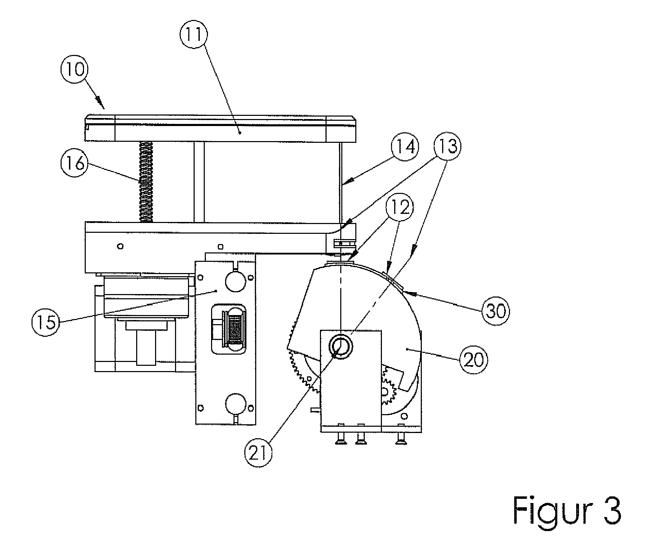

Der Probenhalter 30 mit darin angeordneten Probengefäßen 12, die Proben enthalten, lässt sich wie beschrieben in der Aufnahme 22 der Schwenkeinrichtung 20 anordnen. Dazu ist, wie in Figur 2 dargestellt, die Schwenkeinrichtung 20 in eine bestimmte Winkelposition gekippt, die es ermöglicht, den Probenhalter 30 in die Aufnahme 22 zu schieben. Eine Kollision mit z. B. der Probenahmekanüle 14 wird dadurch ausgeschlossen. Unterschiedliche Radien 35 und 36 dienen als Führung für die Einschiebebewegung des Probenhalters 30. Nach erfolgter Positionierung des Probenhalters 30 in der Schwenkeinrichtung 20 kann diese um einen bestimmten Winkelbetrag verschwenkt werden, so dass, wie in Figur 3 dargestellt, die Probengefäß-Längsachsen 13 von in einer ersten Reihe 37 im Probenhalter 30 angeordneten Probengefäßen 12 im Wesentlichen parallel zur Probenahmekanüle 14 ausgerichtet sind. Die im Probenhalter 30 aufgenommenen Reagenzgefäße befinden sich jetzt in der für die Probenahme geeigneten Winkelposition.

Mittels des ersten Linear-Positionierungssystems 15 lässt sich der Turm 11 derart verfahren, dass die Probenahmekanüle 14 über einem bestimmten Probengefäß 12 angeordnet ist. Mittels des zweiten Linear-Positionierungssystems 16 lässt sich der Turm 11 in senkrechter Richtung verfahren, so dass die Probenahmekanüle 14 in das Probenahmegefäß 12 einfährt und dort eine Probe entnehmen kann. Durch die Probenahmekanüle 14 wird die Probe einer Einrichtung zur Durchführung der Analyse im Inneren des Turms 11 zugeführt.

Um die Proben aus allen Probengefäßen 12 in der ersten Reihe 37 im Probenhalter 30 zu entnehmen, lässt sich der Turm 11 mittels des ersten Linear-Positionierungssystems 15 schrittweise in die jeweiligen Positionen der Probengefäße verfahren. Es lässt sich somit ohne hohen Positionieraufwand bei Einstellung von Verfahrschritten gemäß der Abstände der Probengefäße 12 die Probeentnahme in einfacher und schneller Weise gewährleisten.

Nachdem alle Proben bzw. die gewünschte Anzahl der Proben aus den Probengefäßen 12 der ersten Reihe 37 entnommen wurden, lässt sich in ähnlicher Weise, wie in Figur 3 dargestellt, die Schwenkeinrichtung 20 in eine weitere Winkelposition schwenken, so dass die in der zweiten Reihe 38 angeordneten Probengefäße 12 bzw. deren Probengefäß-Längsachsen 13 parallel zur Probenahmekanüle 14 ausgerichtet sind. Die Probenentnahme aus diesen Probengefäßen 12 in der zweiten Reihe 38 erfolgt genauso, wie im Bezug auf die Probengefäße 12 in der Reihe 37 erläutert.

Nach erfolgter Probenentnahme aus den Probengefäßen 12 in der zweiten Reihe 38 kann die Schwenkeinrichtung 20 wieder in die Position gemäß Figur 2 geschwenkt werden, um den Probenhalter 30 aus der Schwenkeinrichtung 20 zu entfernen.

Wie bereits beschrieben, kann zum Entleeren des Probenhalters 30 dieser einfach ausgekippt werden.

Ein anderer passender Probenhalter 30, der mit Proben bestückt ist, kann in die Aufnahmeeinrichtung 20 eingesetzt werden, oder es wird der bereits verwendete Probenhalter 30 geleert, wieder neu mit Proben bestückt und erneut in die Aufnahmeeinrichtung 20 eingesetzt.

Vorteilhafterweise am Turm 11 angeordnet befindet sich ein Sensor 44 der bei in die Schwenkeinrichtung 20 eingesetztem Probenhalter 30 detektiert, in welcher Aufnahmeöffnung 33 des Probenhalters 30 ein Probengefäß 12 eingesetzt ist. Eine dementsprechende Information kann einer Steuereinrichtung zugeführt werden, die den Verfahrbetrieb und Schwenkbetrieb der Analyseeinrichtung so steuert, dass jede Probe in einem Probengefäß 12, das sich im Probenhalter 30 befindet, vermessen wird.

Durch einen Scanner 40, vorteilhafterweise am Turm 11 befestigt, wird durch Schlitze 34 im Probenhalter 30 ein an der Oberfläche des Probengefäßes 12 angeordneter Barcode ausgelesen, um somit dem Analysator alle nötigen Informationen zur zu analysierenden Probe zukommen zu lassen.

Die Aufnahmeöffnungen 33 im Probenhalter 30 sind derart ausgeführt, dass die üblichen Probengefäße 12 darin aufnehmbar sind.

Die Analyse wird wie folgt durchgeführt:
Der Probenhalter 30 bzw. ein separater Kalibrations- und Kontrollprobenhalter 41 wird mit Kalibrations-, Kontroll- und Patientenproben bestückt und in die Aufnahmeeinrichtung 20 eingesetzt. Der Messvorgang wird gestartet, wobei die Kalibrationsprobe zum Turm bzw. Analysator 11 gefahren wird oder umgekehrt der Turm bzw. Analysator 11 zur Kalibrationsprobe gefahren wird und analysiert wird und die Kalibration durchgeführt wird. Danach werden eine oder mehrere Kontrollproben 41 zum Turm bzw. Analysator 11 gefahren oder es werden umgekehrt der Turm bzw. Analysator 11 zur mehreren Kontrollproben gefahren und es werden Kontrollmessungen durchgeführt. Bei erfolgreicher Kontrolle der Analysefähigkeit und Kalibration werden die Patientenproben in den Probengefäßen 12 zum Turm bzw. Analysator 11 gefahren und analysiert bzw. gemessen.

Die Kalibration dient zur Eichung der Analyse. Es lässt sich als Kalibrationsprobe zum Beispiel eine Glucosekonzentration dem Analysator zuführen.

Die Kontrollsubstanz bzw. Kontrollprobe dient zur Feststellung der Funktionsfähigkeit des Analysators und seiner Fehlertoleranz hinsichtlich der Messwerte. Aus den Kontrollergebnissen lassen sich Rückschlüsse ziehen auf die Qualität der Analyse der Patientenproben.

Entgegen der in den Figur 1 bis 3 dargestellten Ausführungsvariante kann auch vorgesehen sein, dass die Schwenkeinrichtung 20 mit dem ersten Linear-Positionierungssystemen 15 verbunden ist und somit eine Relativbewegung zu einem feststehenden Turm 11 ausführt. Das heißt, dass der Turm 11 auf einer Unterlage in Richtung der Reihenanordnung der Aufnahmeöffnungen fixiert ist und der Probenhalter 30 mit der Aufnahme- bzw. Schwenkeinrichtung 20 auf der Unterlage zumindest in seinem translatorischen Freiheitsgrad in Richtung der Reihenanordnung der Aufnahmeöffnungen verfahrbar ist.

Das heißt, die Proben werden zwecks Probenahme entweder dadurch dem Analysator zugeführt, dass sich die Trommel bzw. Schwenkeinrichtung 20 zur Probenahmekanüle bewegt oder dadurch, dass sich die Probenahmekanüle zur Position des Reagenzgefäßes bewegt.

In besonderer Ausgestaltung kann des Weiteren vorgesehen sein, dass die Schwenkbewegung nicht in die Schwenkeinrichtung bzw. sogenannte Trommel 20 eingeleitet wird, sondern dass der Turm, gegebenenfalls mit daran angeschlossenen Lineareinrichtungen, um eine fixierte Aufnahmeeinrichtung 20 schwenken kann.

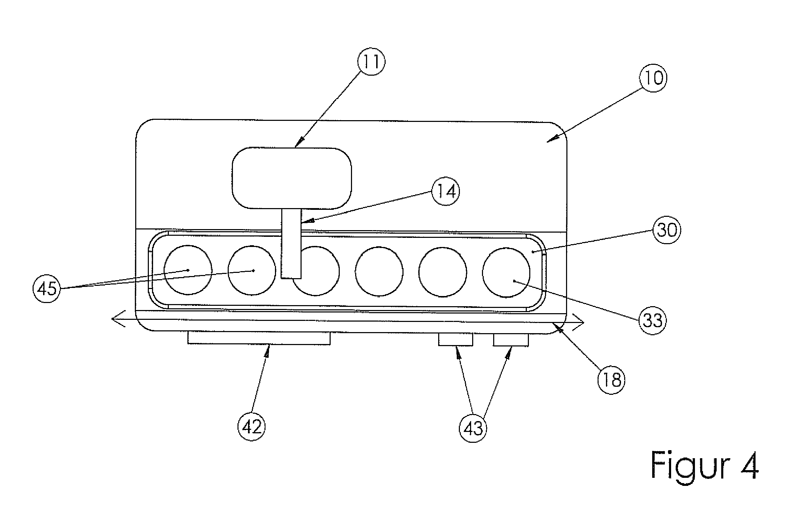

In Figur 4 ist eine Analyseeinheit mit lediglich linear bewegbarer Aufnahmeeinrichtung 20 dargestellt. Das heißt, dass in dieser Ausführungsform keine Schwenkeinrichtung angeordnet ist. Das Anfahren einzelner Probengefäße 12 erfolgt lediglich über translatorische Bewegungen. In der dargestellten einfachen Konstruktion sind die Proben bzw. Probengefäße 12 in lediglich einer Reihe angeordnet, so dass auch nur translatorische Bewegungen in einer Richtung 18 notwendig sind, um nach erfolgter Probenentnahme aus einem Gefäß nächste Gefäße anzufahren.

Abweichend von der in Figur 4 dargestellten Ausführungsform können die Aufnahmeöffnungen 33 im Probenhalter 30 auch in mehreren Reihen angeordnet sein, wobei dann zum Anfahren von Proben bzw. Aufnahmeöffnungen 33 in unterschiedlichen Reihen der Probenhalter und / oder der Turm 11 in einer dritten Richtung, die senkrecht zur Reihe der Aufnahmeöffnungen 33 verläuft, verfahren werden kann. Dazu dient das dritte Linear-Positionierungssystem.

Beispielhaft ist außerdem aus Figur 4 ersichtlich, dass an jeder Analyseeinheit ein Display 42 und Bedienelemente 43 angeordnet sind. Das Display zeigt die von einem Scanner ausgelesenen Informationen und / oder die jeweils analysierten Werte an. Mittels der Bedienelemente lassen sich der Analyseeinheit Befehle hinsichtlich der Positionierung und damit unter anderem der Auswahl einer jeweiligen Probe geben.

Display 42 und Bedienelemente 43 können sowohl separate Elemente sein als auch in einer kombinierten Form vorliegen, wobei im letzteren Fall idealerweise die Bedienelemente 43 im Display 42 integriert sind.

Es lassen sich somit mittels der erfindungsgemäßen Analyseeinheit Proben in Probengefäßen 12 einem Analysator zur Analyse bereitstellen, wobei vorzugsweise in jedem Probengefäß 12 unterschiedliche Proben, z. B. von jeweils einem anderen Patienten enthalten sein können. Dabei können auch fertig bestückte Probenhalter 30 mit daran angeordneten und befüllten Probengefäßen 12 der Analysiereinheit zur Verfügung gestellt werden. Das heißt, dass der Probenhalter 30 am Ort der Probenentnahme bestückt werden kann und anschließend mit den darin aufgenommenen Probengefäßen 12 zur Analysiereinrichtung transportiert werden kann und dort die Analyse der Proben vorgenommen wird. Der Probenhalter 30 kann somit in einer Nebenfunktion auch als Transporthilfsmittel dienen.

Insgesamt verringert sich der Aufwand an manuellen Operationen beim Einsatz eines erfindungsgemäßen Probenhalters 30 in der Schwenkeinrichtung 20 und der Verwendung der erfindungsgemäßen Analyseeinrichtung, da ein bereits bestückter Probenhalter 30 als Einheit in die Aufnahmeeinrichtung 20 einsetzbar ist und nicht mehr Probengefäße 12 in eine extra Aufnahmeeinrichtung einer Analyseeinrichtung einzeln eingesetzt werden müssen.

Es ist dabei keine Festlegung auf einen speziellen Teller erforderlich, sondern durch den zeitlich versetzten Einsatz von ein bis unendlich vielen Probenhaltern in ein und demselben Analysator kann ein Gerät den Tagesanforderungen angepasst eingesetzt werden. Weiterhin entfällt das Anfassen der einzelnen Reagenzgefäße beim Entsorgen. Der Probenhalter ermöglicht die gleichzeitige Entsorgung aller im Probenhalter befindlichen Proben durch Auskippen nach Entnahme des Probenhalters aus der Schwenkeinrichtung bzw. Aufnahmeeinrichtung.

Insgesamt bietet die Erfindung für alle analytischen Einrichtungen insbesondere klinisch analytischen Einrichtungen, aber auch für niedergelassene Ärzte und Apotheken eine kostengünstige und flexible Variante eines Analysegerätes.

### Bezugszeichenliste

- Analyseeinrichtung: 10
- Analysator, Turm: 11
- Probengefäß: 12
- Probengefäß-Längsachse: 13
- Probenahmekanüle: 14
- Erstes Linear-Positionierungssystem: 15
- Zweites Linear-Positionierungssystem: 16
- Drittes Linear-Positionierungssystem: 17
- Lineare Verfahrrichtung: 18
- Aufnahmeeinrichtung, Schwenkeinrichtung: 20
- Drehachse: 21
- Aufnahme: 22
- Probenhalter: 30
- Erste Schwenkrichtung: 31
- Zweite Schwenkrichtung: 32
- Aufnahmeöffnung: 33
- Schlitz: 34
- Erster Radius: 35
- Zweiter Radius: 36
- Erste Reihe: 37
- Zweite Reihe: 38
- Scanner: 40
- Halter für Kalibrations- und Kontrollproben: 41
- Display: 42
- Bedienelemente: 43
- Sensor: 44
- Kalibrations- und Kontrollprobe: 45

## Patentansprüche

1. Analyseeinrichtung zur Analyse von Proben, insbesondere klinischer Patientenproben und/oder Kontrollproben, die einen Analysator umfasst und wenigstens eine daran angeschlossene Probenahmekanüle zur Entnahme der Probe aus einem Probengefäß, insbesondere aus einem Reagenzgefäß, wobei die Analyseeinrichtung eine Aufnahmeeinrichtung umfasst, an der ein Probenhalter zur Aufnahme von Probengefäßen angeordnet ist oder angeordnet werden kann, und wobei die Analyseeinrichtung wenigstens ein erstes Linear-Positionierungssystem umfasst, mittels dessen im Wesentlichen lineare translatorische Relativbewegungen in einer ersten Richtung zwischen der Aufnahmeeinrichtung und dem Analysator durchführbar sind, so dass in dem Probenhalter angeordnete Probengefäße mit ihren Längsachsen derart zur Probenahmekanüle positioniert oder positionierbar sind, dass die Probenahmekanüle in ein Probengefäß einfahrbar ist.

2. Analyseeinrichtung nach Anspruch 1,
**dadurch gekennzeichnet,**
**dass** die Analyseeinrichtung als Aufnahmeeinrichtung eine Schwenkeinrichtung umfasst, an der ein Probenhalter befestigbar oder befestigt ist, der mittels der Schwenkeinrichtung in einen Winkelbereich um eine im Wesentlichen senkrecht zur Probenahmekanülenachse verlaufende Achse derart verschwenkbar ist, so dass abweichend von der ersten Linearbewegungsrichtung nebeneinander im Probenhalter angeordnete Probengefäße unter der Probenahmekanüle positionierbar sind.

3. Analyseeinrichtung nach Anspruch 2,
**dadurch gekennzeichnet,**
**dass** die Schwenkeinrichtung Formelemente aufweist, die im wesentlichen komplementär zu äußeren Formelementen eines Probenhalters ausgestaltet sind, um den Probenhalter im Wesentlichen formschlüssig aufnehmen zu können oder aufzunehmen.

4. Analyseeinrichtung nach wenigstens einem der vorhergehenden Ansprüche,
**dadurch gekennzeichnet,**
**dass** die Analyseeinrichtung ein zweites Linear-Positionierungssystem umfasst zur Realisierung von linearen translatorischen Bewegungen des Analysators in Bezug zur Aufnahmeeinheit in einer zweiten Richtung, die im Wesentlichen senkrecht zur ersten Bewegungsrichtung verläuft.

5. Analyseeinrichtung nach wenigstens einem der vorhergehenden Ansprüche,
**dadurch gekennzeichnet,**
**dass** der Analysator fixiert ist und die Aufnahmeeinrichtung mittels des ersten Linear-Positionierungssystems bewegbar ist.

6. Analyseeinrichtung nach wenigstens einem der Ansprüche 1-5,
**dadurch gekennzeichnet,**
**dass** die Aufnahmeeinrichtung fixiert ist und der Analysator mittels des ersten Linear-Positionierungssystems bewegbar ist.

7. Analyseeinrichtung nach wenigstens einem der vorhergehenden Ansprüche,
**dadurch gekennzeichnet,**
**dass** die Analyseeinrichtung ein drittes Linear-Positionierungssystem umfasst zur Verschiebung der Aufnahmeeinrichtung in einer dritten Richtung, die im Wesentlichen senkrecht zur ersten und zur zweiten Bewegungsrichtung verläuft.

8. Analyseeinrichtung nach wenigstens einem der vorhergehenden Ansprüche,
**dadurch gekennzeichnet,**
**dass** die Analyseeinrichtung einen Scanner umfasst.

9. Probenhalter zur Aufnahme von Probengefäßen, insbesondere von Reagenzgefäßen, der im wesentlichen als Block ausgebildet ist und eine Mehrzahl von Aufnahmeöffnungen zum Einstecken der Probengefäße aufweist, wobei er dabei derart ausgestaltet ist, dass er in der Aufnahmeeinrichtung der Analyseeinrichtung nach wenigstens einem der Ansprüche 1-8 aufnehmbar ist und durch diese Aufnahmeeinrichtung verfahrbar und/oder, bei Ausgestaltung der Aufnahmeeinrichtung als Schwenkeinrichtung, um eine Achse schwenkbar ist.

10. Probenhalter nach Anspruch 9,
**dadurch gekennzeichnet,**
**dass** der Probenhalter derart ausgestaltet ist, dass er aufgrund von Auflagerpunkten oder einer Auflagerfläche selbstständig stehen kann.

11. Probenhalter nach wenigstens einem der Ansprüche 9 oder 10,
**dadurch gekennzeichnet,**
**dass** Aufnahmeöffnungen im Probenhalter linear in Reihe in regelmäßigen Abständen angeordnet sind.

12. Probenhalter nach Anspruch 11,
**dadurch gekennzeichnet,**
**dass** der Probenhalter mehrere Reihen von Aufnahmeöffnungen umfasst, und die einzelnen Aufnahmeöffnungen der Reihen zueinander versetzt angeordnet sind.

13. Probenhalter nach wenigstens einem der Ansprüche 9-12,
**dadurch gekennzeichnet,**
**dass** eine Mehrzahl der Aufnahmeöffnungen im Probenhalter einen zu einer Längsseite des Probenhalters ausgerichteten Schlitz in Richtung der Längsachse der Aufnahmeöffnung umfasst, so dass seitlich von außerhalb des Probenhalters die Anordnung eines Probengefäßes in einer Aufnahmeöffnung optisch erkennbar ist.

14. Analyseeinheit, umfassend eine Analyseeinrichtung nach wenigstens einem der Ansprüche 1-8 und wenigstens einen in die Aufnahmeeinrichtung eingesetzten Probenhalter nach wenigstens einem der Ansprüche 9-13.

15. Verfahren zum Betreiben der Analyseeinheit nach Anspruch 14, **dadurch gekennzeichnet, dass** ein Probenhalter mit Proben bestückt wird, danach an der Aufnahmeeinrichtung befestigt wird und mittels linearer Bewegungen derart Positionierungen des Probenhalters in Bezug zur Probenahmekanüle erfolgen, dass in einer jeweiligen Position die Entnahme einer jeweiligen Probe realisierbar ist und danach eine jeweilige Probenentnahme und Analyse erfolgt.
